# EUROPEAN PATENT APPLICATION

(11) **EP 4 369 742 A1**
(43) Date of publication of application: **15.05.2024**
(21) Application number: 21948805.3
(22) Date of filing: 07.07.2021
(51) Int. Cl.: H04W 4/02, H04W 4/20

(54) **POSITIONING METHOD AND APPARATUS**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2021/105071
(87) International publication number: WO 2023/279307

(57) **Abstract**

Disclosed in embodiments of the present application are a positioning method and apparatus. The method is performed by a terminal device. The method comprises: receiving preconfigured first positioning assistance information; determining whether the first positioning assistance information is available; and using the first positioning assistance information when the first positioning assistance information is available. By implementing the embodiments of the present application, the problem of inaccurate positioning caused by positioning the terminal device by means of the pre-configured first positioning assistance information when the first positioning assistance information is unavailable can be avoided, and thus, a relatively accurate position of the terminal device can be obtained.

## Description

### TECHNICAL FIELD

The present disclosure relates to the field of communication technology, particularly to a positioning method and a device.

### BACKGROUND

Currently, various positioning technologies have been introduced in the NR (New Radio) system of 5G (the 5th Generation) to locate a terminal device. In some positioning technologies, it is necessary to provide positioning assistance information to the terminal device.

In the related art, it is proposed to pre-configure positioning assistance information for the terminal device. When the terminal device needs to be located, no positioning assistance information is sent to the terminal device. The terminal device can directly use the pre-configured positioning assistance information.

However, there is a time difference between a time point when the pre-configured positioning assistance information is configured and an actual time point when the terminal device uses the pre-configured positioning assistance information during positioning. Therefore, how to make the terminal device use the pre-configured positioning assistance information during positioning to achieve accurate positioning of the terminal device is an urgent technical problem that needs to be solved.

### SUMMARY

Embodiments of the present disclosure provide a positioning method and a device. By using the positioning method provided in the embodiments of the present disclosure, it is possible to avoid a problem of inaccurate positioning caused by using invalid pre-configured first positioning assistance information to locate a terminal device, thus obtaining a relatively accurate position of the terminal device.

In a first aspect, an embodiment of the present disclosure provides a positioning method. The method is performed by a terminal device, including: receiving pre-configured first positioning assistance information; and determining whether the first positioning assistance information is available, and using the first positioning assistance information when the first positioning assistance information is available.

In this technical solution, the terminal device receives the pre-configured first positioning assistance information, and determines whether the first positioning assistance information is available. The first positioning assistance information is used when the first positioning assistance information is available. It may be determined whether the first positioning assistance information is available when the pre-configured first positioning assistance information is used during actual positioning. When the first positioning assistance information is available, the first positioning assistance information is used to locate the terminal device. In this way, it is possible to avoid the problem of inaccurate positioning of the terminal device caused by using the first positioning assistance information when the pre-configured first positioning assistance information is unavailable, thereby obtaining a relatively accurate terminal device position.

In some embodiments, the method further includes: determining that the first positioning assistance information is unavailable, and sending a request message for positioning assistance information to a location management function (LMF) device.

In some embodiments, the method further includes: determining that the first positioning assistance information is unavailable, and sending an error indication message to an LMF device, to indicate that the first positioning assistance information is unavailable.

In some embodiments, the method further includes: determining that the first positioning assistance information is unavailable, and sending a location providing information message to an LMF device, wherein the location providing information message contains error indication information for indicating that the first positioning assistance information is unavailable.

In some embodiments, determining that the first positioning assistance information is unavailable includes: receiving a message triggering the terminal device to use the first positioning assistance information, and determining that the terminal device is unable to measure a positioning reference signal (PRS) based on the first positioning assistance information.

In some embodiments, determining that the first positioning assistance information is unavailable includes: determining that the first positioning assistance information has a timeliness characteristic, and determining that the first positioning assistance information is invalid.

In some embodiments, the method further includes: sending the request message for the positioning assistance information to the LMF device when the first positioning assistance information is invalid.

In some embodiments, determining whether the first positioning assistance information is available and using the first positioning assistance information when the first positioning assistance information is available includes: receiving a message triggering the terminal device to use the first positioning assistance information, and determining whether a network device sends second positioning assistance information required for applying a current positioning technology; determining whether the first positioning assistance information is consistent with the second positioning assistance information when the network device sends the second positioning assistance information; and using the first positioning assistance information or the second positioning assistance information when the first positioning assistance information is consistent with the second positioning assistance information.

In some embodiments, the method further includes: determining that the first positioning assistance information is inconsistent with the second positioning assistance information, and using the second positioning assistance information.

In some embodiments, the method further includes: determining that the first positioning assistance information is inconsistent with the second positioning assistance information, sending a request message for positioning assistance information to an LMF device.

In some embodiments, receiving the pre-configured first positioning assistance information includes: receiving the first positioning assistance information sent by an LMF device through a long term evolution positioning protocol (LPP) message; or receiving the first positioning assistance information sent by a network device, the first positioning assistance information being provided by the LMF device.

In a second aspect, an embodiment of the present disclosure provides a communication device. The communication device has some or all of the functions of the terminal device in the above method in the first aspect. For example, the functions of the communication device may have some or all of the functions in the present disclosure, or may have the functions of implementing any one of the embodiments separately. The functions can be implemented through hardware or by executing corresponding software through hardware. The hardware or software includes one or more units or modules corresponding to the above functions.

In some embodiments, a structure of the communication device may include a transceiver module and a processing module. The transceiver module is configured to receive pre-configured first positioning assistance information. The processing module is configured to determine whether the first positioning assistance information is available, and use the first positioning assistance information when the first positioning assistance information is available.

In a possible implementation, the structure of the communication device may include a transceiver module and a processing module. The processing module is configured to support the communication device in executing the corresponding functions in the above method. The transceiver module is configured to support communication between the communication device and other devices. The communication device may further include a storage module. The storage module is configured to couple with the transceiver module and processing module, and store necessary computer programs and data for the communication device.

For example, the processing module may be a processor, the transceiver module may be a transceiver or a communication interface, and the storage module can be a memory.

In a third aspect, an embodiment of the present disclosure provides a communication device. The communication device includes a processor and a memory. The memory stores a computer program. The processor executes the computer program stored in the memory to enable the communication device to execute the above method in the first aspect.

In a fourth aspect, an embodiment of the present disclosure provides a communication device. The device includes a processor and an interface circuit. The interface circuit is configured to receive code instructions and transmit the code instructions to the processor. The processor is configured to execute the code instructions to enable the device to perform the above method in the first aspect.

In a fifth aspect, an embodiment of the present disclosure provides a computer-readable storage medium configured to store instructions used by a terminal device. When the instructions are executed, the terminal device is caused to perform the above method in the first aspect.

In a sixth aspect, an embodiment of the present disclosure provides a computer program product including a computer program. When the computer program product is executed on a computer, the computer is caused to perform the above method in the first aspect.

In a seventh aspect, an embodiment of the present disclosure provides a chip system. The chip system includes at least one processor and an interface to support a terminal device in implementing functions involved in the first aspect, such as determining or processing at least one of data or information involved in the above method. In a possible design, the chip system further includes a memory for storing necessary computer programs and data for the terminal device. The chip system may be composed of chips or include a chip and other independent components.

In an eighth aspect, an embodiment of the present disclosure provides a computer program. When the computer program is executed on a computer, the computer is caused to perform the above method in the first aspect.

### BRIEF DESCRIPTION OF THE DRAWINGS

To describe the technical solution in the embodiments of the disclosure or the background technology more clearly, description is made below to the accompanying drawings required to be used in the embodiments of the disclosure or the background technology.
FIG. 1 is an architecture diagram illustrating a communication system according to an embodiment of the disclosure.
FIG. 2 is a flow chart illustrating a positioning method according to an embodiment of the disclosure.
FIG. 3 is a flow chart illustrating a positioning method according to an embodiment of the disclosure.
FIG. 4 is a flow chart illustrating a positioning method according to an embodiment of the disclosure.
FIG. 5 is a block diagram illustrating a communication device according to an embodiment of the disclosure.
FIG. 6 is a block diagram illustrating a communication device according to an embodiment of the disclosure.
FIG. 7 is a structural diagram illustrating a chip according to an embodiment of the disclosure.

### DETAILED DESCRIPTION

In order to better understand a positioning method disclosed in the embodiments of the disclosure, a communication system applicable to the embodiments of the disclosure is firstly described below.

A technical solution of the embodiments of the disclosure can be used in various communication systems, such as: a global system for mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, a universal mobile telecommunication system (UMTS), a worldwide interoperability for microwave access (WiMAX) communication system, a future fifth generation (5G) system or a new radio (NR) system.

A terminal device in the embodiments of the disclosure may refer to user equipment (UE), an access terminal, a user unit, a user station, a mobile station, a mobile station, a remote station, a remote terminal, a mobile device, a user terminal, a terminal, a wireless communication device, a user agent or a user device. The terminal may also be a cellular phone, a cordless phone, a session initiation protocol (SIP) phone, a wireless local loop (WLL) station, a personal digital assistant (PDAs), a handheld device with a wireless communication capability, a computing device or other processing devices connected to a wireless modem, an in-vehicle device, a wearable device, a terminal in the future 5G network or a terminal in a future evolved public land mobile network (PLMN), which is not limited in the embodiments of the disclosure.

A network device in the embodiments of the disclosure may be a device for communicating with the terminal device. The network device may be a base transfer station (BTS) in a global system for mobile communication (GSM) system or a code division multiple access (CDMA) system, a base station (NodeB, NB) in a wideband code division multiple access (WCDMA) system, or an evolved base station (eNB or eNodeB) in an LTE system. Or, the network device may be a wireless controller in a cloud radio access network (CRAN) scenario, or the network device may be a relay station, an access point, an in-vehicle device, a wearable device, as well as a network device (gNodeB, gNB) in a future 5G network or a network device in a future evolved PLMN network, which is not limited in the embodiments of the disclosure.

In embodiments of the disclosure, the terminal device or the network device includes a hardware layer, an operating system layer operating on top of the hardware layer, and an application layer operating on top of the operating system layer. The hardware layer includes hardware such as a central processing unit (CPU), a memory management unit (MMU), and a memory (also known as main memory), etc. The operating system may be any one or more computer operating systems that implement service processing through processes, such as a Linux operating system, a Unix operating system, an Android operating system, an iOS operating system, or a Windows operating system. The application layer includes applications such as a browser, contacts, word processing software, instant messaging software, etc. Moreover, embodiments of the disclosure do not specifically limit a specific structure of an execution subject of the method provided in the embodiments of the disclosure, as long as a program that records codes of the methods provided in the embodiments of the disclosure can be executed to perform communication according to the methods provided in the embodiments of the disclosure. For example, the execution subject of the methods provided in the embodiments of the disclosure may be a terminal device or a network device, or a functional module in the terminal device or network device that can call and execute the program.

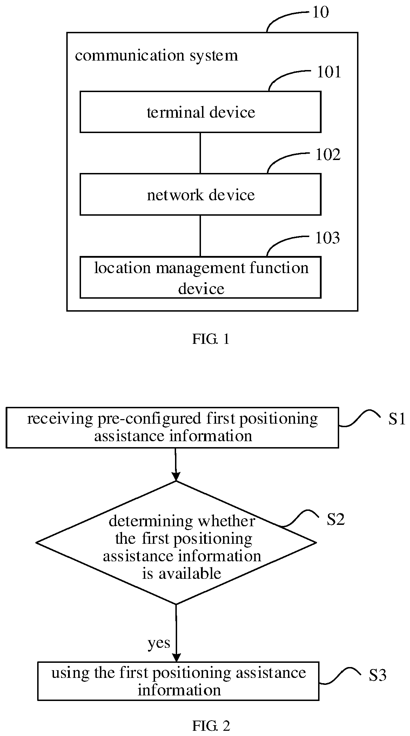

FIG. 1 is a structural diagram of a possible communication system 10 applicable to the present disclosure.

As shown in FIG. 1, the communication system 10 includes a terminal device 101, a network device 102, and a location management function device 103, which are described below respectively.

1. The terminal device (TD) 101, abbreviated as a terminal, is a device with wireless transmission and reception functions, which can include various handheld devices with wireless communication functions, vehicle devices, wearable devices, computing devices or other processing devices connected to a wireless modem, as well as various forms of terminals, mobile stations (MS), terminals, User equipment (UE), soft terminals, and so on. The terminal may be deployed on land, including indoor or outdoor, handheld or vehicle mounted. The terminal may also be deployed on the water surface (such as ships, etc.). The terminal may also be deployed in the air (such as airplanes, balloons, and satellites). For example, the terminal may be a mobile phone, a tablet, a computer with wireless transmission and reception capabilities, a virtual reality (VR) terminal, an augmented reality (AR) terminal, a wireless terminal in industrial control, a wireless terminal in self-driving, a wireless terminal in remote medical, a wireless terminal in a smart grid, a wireless terminal in transportation safety, a wireless terminal in smart city, and a wireless terminal in smart home.

2. The (radio) network device (also called a radio access network (R)AN) 102 is a device that provides a wireless communication function for the terminal, including but not limited to: a next-generation base station (g nodeB, gNB) in 5G, an evolved node B (eNB), a radio network controller (RNC), a node B (NB), a base station controller (BSC), a Base transceiver station (BTS), a home station (such as a home evolved NodeB, or a home node B (HNB)), a base band unit (BBU), a transmitting and receiving point (TRP), a transmitting point (TP), etc.

3. The location management function device 103, also known as a location management network element, is used for location management of the terminal device 101, such as determining location information of UE. The location management function device in the fifth generation (5G) wireless communication system may be an LMF (location management function) device, which can determine the location information of the UE based on a request from a core network entity (such as an access and mobility management function (AMF)) and provide the location information of the UE to AMF, thus providing location services (LCS). In implementation, the AMF can allocate at least one LMF to the UE to provide the location services. The UE may request location information from the LMF through the AMF when the UE intends to obtain location information. In future communication (such as 6G or other networks), the location management network element may still be an LMF network element or have other names, which is not limited in the disclosure.

It should be noted that the functional devices involved in the embodiments of the disclosure can also be referred to as network elements, functions, or functional entities. For example, the location management functional device may also be referred to as a location management function, a location management functional entity or a location management network element. The name of each functional device is not limited in the disclosure, and those skilled in the art may replace the names of the aforementioned functional devices with other names to perform the same function, all of which fall within the scope of protection of the disclosure

It can be understood that the above-mentioned functional devices can be network components in hardware devices, software functions running on dedicated hardware, or virtualization functions instantiated on a platform (such as a cloud platform).

It can be understood that the communication system described in embodiments of the disclosure is intended to provide a clear description of the technical solution of the embodiments of the disclosure, and does not constitute a limitation on the technical solution provided in the embodiments of the disclosure. It is known to those skilled in the art that, with the evolution of the system architecture and the emergence of new service scenarios, the technical solution provided in the embodiments of the disclosure is also applicable to similar technical problems.

A detailed introduction is made to a positioning method and a device provided in the disclosure with reference to the accompanying drawings.

FIG. 2 is a flow chart of a positioning method provided in an embodiment of the disclosure.

As illustrated in FIG. 2, the method is performed by a terminal device, including but not limited to the following steps:
S1: pre-configured first positioning assistance information is received.

In an NR (New Radio) system of 5G (the 5th Generation), various positioning technologies are introduced to locate the terminal device.

In some positioning technologies, the terminal device receives the pre-configured first positioning assistance information. When positioning of the terminal device is to be performed, it is no longer necessary to receive the positioning assistance information, and the terminal device can directly use the pre-configured first positioning assistance information.

It can be understood that the terminal device may receive the pre-configured first positioning assistance information in various ways, such as: receiving the first positioning assistance information sent by an LMF device through a Long Term Evolution Positioning Protocol (LPP) message, or receiving the first positioning assistance information sent by a network device through broadcasting, the first positioning assistance information being provided by the LMF device.

S2: it is determined whether the first positioning assistance information is available.

The pre-configured first positioning assistance information includes a timeliness indicator, and has a timeliness characteristic. For example, the pre-configured first positioning assistance information is valid in a specific area or within a specific time period.

It can be understood that the first positioning assistance information of the terminal device is pre-configured, for example, pre-configured at time point T1. When positioning the terminal device, the terminal device uses the first positioning assistance information at time point T2. There is a time difference between time point T1 and time point T2, which may cause the pre-configured first positioning assistance information to become invalid when positioning the terminal device, thus leading to inaccurate positioning of terminal device.

In the embodiments of the disclosure, it is identified whether the first positioning assistance information is available. In detail, this can be achieved by detecting whether the terminal device is out of a specific area of the timeliness characteristic of the first positioning assistance information, or by determining whether a time point of using the first positioning assistance information is out of a specific time period of the timeliness characteristic of the first positioning assistance information, or the terminal device being unable to measure a positioning reference signal PRS (PRS) based on the first positioning assistance information.

It should be noted that the above methods are only for illustrative purposes and are intended to provide a clear description of the technical solution of the embodiments of the disclosure. It does not constitute a limitation on the technical solution provided by the embodiments of the disclosure. Here, the methods for determining whether the first positioning assistance information is available are not listed one by one. Those skilled in the art may know that, with the evolution of the system architecture and the emergence of new service scenarios, the technical solution provided in the embodiments of the disclosure is also applicable to similar technical problems.

S3: the first positioning assistance information is used when the first positioning assistance information is available.

In the embodiments of the disclosure, it is determined whether the first positioning assistance information is available. When the first positioning assistance information is available, the first positioning assistance information is used, to ensure that the terminal device can accurately locate the terminal device and obtain a relatively accurate terminal device position when actually using the pre-configured first positioning assistance information.

According to the embodiments of the disclosure, the terminal device receives the pre-configured first positioning assistance information, and determines whether the first positioning assistance information is available. The first positioning assistance information is used when the first positioning assistance information is available. It may be determined whether the first positioning assistance information is available when the pre-configured first positioning assistance information is used during actual positioning. When the first positioning assistance information is available, the first positioning assistance information is used to locate the terminal device. In this way, it is possible to avoid the problem of inaccurate positioning of the terminal device caused by using the first positioning assistance information when the pre-configured first positioning assistance information is unavailable, thereby obtaining a relatively accurate terminal device position.

In some embodiments, in the positioning method provided in the embodiments of the disclosure, a request message for positioning assistance information is sent to the LMF device when the first positioning assistance information is unavailable.

In embodiments of the disclosure, when the first positioning assistance information is unavailable, the request message for positioning assistance information is sent to the LMF device. For example, Long Term Evolution Positioning Protocol (LPP) request assistance data is sent to request the LMF device to reconfigure the positioning assistance information to the terminal device. Thus, the pre-configured first positioning assistance information is no longer used when positioning the terminal device, and the reconfigured positioning assistance information requested by terminal device is applied, so as to avoid the problem of inaccurate positioning of the terminal device.

In some embodiments, the LMF device in embodiments of the disclosure reconfigures the positioning assistance information to the terminal device, which can be implemented by reconfiguring the positioning assistance information to the terminal device through a Long Term Evolution Positioning Protocol (LPP) message, or by providing positioning assistance information to the network device again and reconfiguring the positioning assistance information to the terminal device by broadcasting of the network device.

In some embodiments, in embodiments of the disclosure, when the first positioning assistance information is unavailable, an error indication message is sent to the LMF device, to indicate that the first positioning assistance information is unavailable.

In an exemplary embodiment, when the first positioning assistance information is unavailable, the terminal device sends an LPP error message (LPP error) to the LMF device, and an error cause is an error in the positioning assistance information. Therefore, it is possible to not use the pre-configured first positioning assistance information when positioning the terminal device, so as to avoid the problem of inaccurate positioning of the terminal device.

In some embodiments, when the first positioning assistance information is unavailable, a location providing information message is sent to the LMF device. The location providing information message contains error indication information, indicating that the first positioning assistance information is unavailable.

In an exemplary embodiment, when the first positioning assistance information is unavailable, the terminal device sends the location providing information message to the LMF device. The message contains the error indication information indicating that the first positioning assistance information is unavailable. Therefore, it is possible to not use the pre-configured first positioning assistance information when positioning the terminal device, so as to avoid the problem of inaccurate positioning of the terminal device.

In some embodiments, the first positioning assistance information being unavailable. This includes: when a message triggering the terminal device to use the first positioning assistance information is received, the terminal device being unable to measure the positioning reference signal (PRS) based on the first positioning assistance information.

In an exemplary embodiment, the terminal device receives a location information request message, and the terminal device is unable to measure the PRS based on the first positioning assistance information. In this case, it indicates that the pre-configured first positioning assistance information is unavailable.

In embodiments of the disclosure, when the terminal device is unable to measure the PRS based on the first positioning assistance information, it is determined that the first positioning assistance information is invalid, thereby determining that the first positioning assistance information is unavailable. On this basis, the terminal device sends the request message for positioning assistance information to the LMF device, or sends the error indication message to the LMF device, indicating that the first positioning assistance message is unavailable, or sends the location providing information message to the LMF device. The location providing information message contains the error indication information, indicating that the first positioning assistance information is unavailable.

In some embodiments, the first positioning assistance information is unavailable. This includes: determining that the first positioning assistance information is invalid when the first positioning assistance information has timeless.

In detail, the first positioning assistance information has a timeliness characteristic. That is, the first positioning assistance information is valid in a specific area and/or within a specific time period.

It can be understood that the pre-configured first positioning assistance information is valid in the specific area, and the pre-configured first positioning assistance information may vary in different cells. When the terminal device is in a certain cell, the pre-configured first positioning assistance information is valid, but when the terminal device moves from one cell to another, the first positioning assistance information may become invalid. The first positioning assistance information is valid for the specific time period, and the pre-configured first positioning assistance information may be pre-set to be valid for the specific time period. After exceeding the specific time period, the pre-configured first positioning assistance information may become invalid.

When positioning the terminal device, it indicates that the pre-configured first positioning assistance information is valid when the terminal device does not exceed the specific area and/or when the terminal device does not use the first positioning assistance information beyond the specific time period. At this time, the terminal device may be accurately located.

In embodiments of the disclosure, in the case where the first positioning assistance information has a timeliness characteristic, it is determined that the first positioning assistance information is invalid, thereby determining that the first positioning assistance information is unavailable. On this basis, the terminal device sends the request message for positioning assistance information to the LMF device, or sends the error indication message to the LMF device, to indicate that the first positioning assistance message is unavailable, or sends the location providing information message to the LMF device. The location providing information message contains the error indication information, indicating that the first positioning assistance information is unavailable.

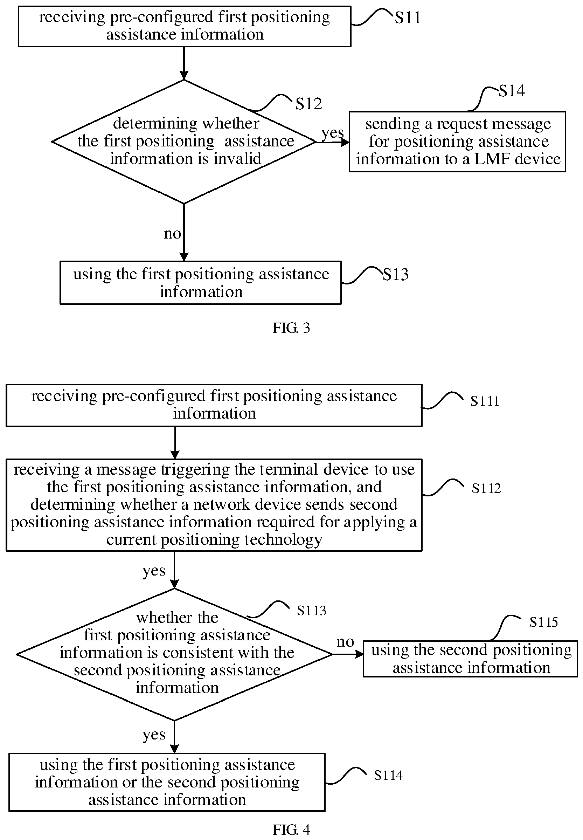

FIG. 3 is a flowchart of a positioning method provided in an embodiment of the disclosure.

As illustrated in FIG. 3, the method is performed by a terminal device, including but not limited to the following steps.

S11: pre-configured first positioning assistance information is received.

S11 has the same or similar technical effect as S1 in the above embodiment. For the specific implementation of the S 11, reference may be made to the description of the specific implementation of S1 in the above embodiment, which will not be repeated here.

S12: it is determined whether the first positioning assistance information is invalid when the first positioning assistance information has a timeliness characteristic.

In detail, the first positioning assistance information has a timeliness characteristic. That is, the first positioning assistance information is valid in a specific area and/or within a specific time period.

It can be understood that the pre-configured first positioning assistance information is valid in the specific area, and the pre-configured first positioning assistance information may vary in different cells. When the terminal device is in a certain cell, the pre-configured first positioning assistance information is valid, but when the terminal device moves from one cell to another, the first positioning assistance information may have become invalid. The first positioning assistance information is valid for the specific time period, and the pre-configured first positioning assistance information may have been pre-set to be valid for the specific time period. After exceeding the specific time period, the pre-configured first positioning assistance information may become invalid.

In the case where the first positioning assistance information has a timeliness characteristic of being valid in a specific area and/or specific time period, a location of the terminal device and/or a time point of positioning the terminal device and a time point of pre-configuring the first positioning assistance information can be detected, and it may be determined whether the first positioning assistance information is invalid.

It should be noted that the timeliness characteristic of the first positioning assistance information is not only valid in the specific area and/or within the specific time period, it can also be valid when other conditions are met, which may be set as needed, and is not limited in the disclosure.

S13: When the first positioning assistance information is not invalid, the first positioning assistance information is used.

In detail, the first positioning assistance information is not invalid. That is, the terminal device is not out of the specific area when using first positioning assistance information for positioning, and/or a time difference between the time point when the terminal device uses the first positioning assistance information and the time point when the first positioning assistance information is pre-configured does not exceed the specific time period.

Based on this, in the case where the first positioning assistance information is not invalid, the first positioning assistance information can be directly used when positioning the terminal device, and the terminal device can be accurately located. S14: a request message for positioning assistance information is sent to an LMF device when the first positioning assistance information is invalid.

In detail, the first positioning assistance information is invalid. That is, the terminal device is out of the specific area when using the first positioning assistance information for positioning, and/or the time difference between the time point when the terminal device uses the first positioning assistance information and the time point when the first positioning assistance information is pre-configured exceeds the specific time period.

In embodiments of the disclosure, when the first positioning assistance information has a timeliness characteristic, it is determined that the first positioning assistance information is invalid, thereby determining that the first positioning assistance information is unavailable. Based on this, the terminal device sends the request message for positioning assistance information to the LMF device.

In embodiments of the disclosure, when the first positioning assistance information is time sensitive, when it is determined that the first positioning assistance information is invalid, and when the first positioning assistance information is unavailable, the request message for positioning assistance information is sent to the LMF device. For example, LPP request assistance data is sent to request the LMF device to reconfigure positioning assistance information to the terminal device, so that the pre-configured first positioning assistance information is no longer used when positioning the terminal device, and the reconfigured positioning assistance information requested by the terminal device may be applied, to avoid inaccurate positioning of the terminal device.

In embodiments of the disclosure, the LMF device reconfiguring the positioning assistance information to the terminal device may be realized by the following ways. The LMF device may reconfigure the positioning assistance information to the terminal device through an LPP message. Or, the LMF device provides positioning assistance information to a network device, and the positioning assistance information is reconfigured to the terminal device by broadcasting of the network device.

In an exemplary embodiment, when the first positioning assistance information has a timeliness characteristic, when it is determined that the first positioning assistance information is invalid, and when the first positioning assistance information is unavailable, the terminal device can wait for the network device to send an indication triggering the terminal device to use the pre-configured first positioning assistance information. When receiving the indication triggering the terminal device to use the pre-configured first positioning assistance information from the network device, the terminal device performs the corresponding steps, which may refer to the steps in some above embodiments of the disclosure, and will not be repeated here.

FIG. 4 is a flowchart of a positioning method provided in an embodiment of the disclosure.

As illustrated in FIG. 4, the method is executed by a terminal device, including but not limited to the following steps.

S111: pre-configured first positioning assistance information is received.

S111 has the same or similar technical effects as S1 and S11 in the above embodiments. For the specific implementation of the Sill, reference may be made to the description of the specific implementation of S1 and S11 in the above embodiments, which will not be repeated here.

S112: when receiving a message triggering the terminal device to use the first positioning assistance information, it is determined whether a network device sends the second positioning assistance information required for applying a current positioning technology.

In an exemplary embodiment, the terminal device receives a message that triggers the terminal device to use the first positioning assistance information configured through an LPP message by the network. For example, the terminal device receives a location information request message, and it is determined whether the network device sends the second positioning assistance information required for applying the current positioning technology. For example, it is determined whether the base station broadcasts an NR DL-TDOA/DL-AoD Assistance Data message, i.e., a posSibType6-1 message, a posSibType6-2 message, or a posSibType6-3 message.

S113: it is determined whether the first positioning assistance information is consistent with the second positioning assistance information when the network device sends the second positioning assistance information.

When the base station sends the second positioning assistance information required for applying the current positioning technology, it is determined whether the first positioning assistance information is consistent with the second positioning assistance information.

It can be understood that, when the first positioning assistance information is consistent with the second positioning assistance information, it indicates that the pre-configured first positioning assistance information is able to be applied to the current positioning technology, the terminal device is able to be accurately located, and a relatively accurate terminal device position is obtained. However, if the first positioning assistance information is inconsistent with the second positioning assistance information, it indicates that the pre-configured first positioning assistance information is not applicable to the current positioning technology, and using the first positioning assistance information may be hard to obtain an accurate terminal device position.

S114: the first positioning assistance information or the second positioning assistance information is used when the first positioning assistance information is consistent with the second positioning assistance information.

In embodiments of the disclosure, when the first positioning assistance information is consistent with the second positioning assistance information, the first positioning assistance information or the second positioning assistance information may be directly used, which is applicable to the current positioning technology. That is, it can meet the needs of the current positioning technology, so as to accurately locate the terminal device and obtain a relatively accurate terminal device position.

As illustrated in FIG. 4, in some embodiments, the positioning method provided in embodiments of the disclosure further includes the following step S115: the second positioning assistance information is used when the first positioning assistance information is inconsistent with the second positioning assistance information.

In embodiments of the disclosure, when the first positioning assistance information is inconsistent with the second positioning assistance information, the second positioning assistance information is used, and applied to the current positioning technology, which can meet the requirements of the current positioning technology, thereby accurately positioning the terminal device and obtaining a relatively accurate position of the terminal device.

In some embodiments, when the first positioning assistance information is inconsistent with the second positioning assistance information, a request message for positioning assistance information is sent to an LMF device.

In embodiments of the disclosure, when the first positioning assistance information is inconsistent with the second positioning assistance information, it is determined that the first positioning assistance information is unavailable, and the request message for positioning assistance information is sent to the LMF device. For example, LPP request assistance data is sent to request the LMF device to reconfigure the positioning assistance information to the terminal device. Thus, the pre-configured first positioning assistance information is no longer used when positioning the terminal device, and the reconfigured positioning assistance information is applied, so as to avoid the problem of inaccurate positioning of the terminal device.

In some embodiments, the LMF device in embodiments of the disclosure reconfigures the positioning assistance information to the terminal device, which can be achieved by reconfiguring the positioning assistance information to the terminal device through an LPP message, or by providing the positioning assistance information to the network device again and reconfiguring the positioning assistance information to the terminal device through broadcasting of the network device.

In some embodiments, receiving the pre-configured first positioning assistance information includes: receiving the first positioning assistance information sent by the LMF device through an LPP message; or receiving the first positioning assistance information sent by the network device through a positioning system message, the first positioning assistance information being provided by the LMF device.

The LMF device sends the first positioning assistance information through the LPP message. For example, the network device transmits the first positioning assistance information sent by the LMF device to the terminal device in a transparent transmission mode, and the network device may be a base station.

The first positioning assistance information provided by the LMF device and sent by the network device is received. For example, the LMF device provides the positioning assistance information to the network device, and the network device sends the positioning assistance information to the terminal device through broadcasting. The network device may be a base station.

It should be noted that, in embodiments of the disclosure, when the network device sends the second positioning assistance information required for applying the current positioning technology, the terminal device receives the pre-configured first positioning assistance information, and there may be both the first positioning assistance information and the second positioning assistance information. In this case, the transmission methods of the first positioning assistance information and the second positioning assistance information may be inconsistent. It can be understood that in the case where the first positioning assistance information is sent by the LMF device through the LPP message, the second positioning assistance information is sent by the network device and provided by the LMF device. In the case where the first positioning assistance information is sent through the network device and provided by the LMF device, the second positioning assistance information is sent by the LMF device through the LPP message.

By implementing embodiments of the disclosure, when positioning the terminal device, it is possible to determine in advance whether the pre-configured first positioning assistance information is available, and thus the first positioning assistance information is used to locate the terminal device when the first positioning assistance information is available. In this way, it is possible to avoid inaccurate positioning of the terminal device caused by invalid first positioning assistance information, thereby obtaining a relatively accurate location of the terminal device.

In some embodiments, the terminal device may receive the pre-configured first positioning assistance information, and may also receive the second positioning assistance information required for applying the current positioning technology sent by the network device.

The first positioning assistance information may be the information sent by the LMF device to the terminal device through the LPP message, and the second positioning assistance information is the information provided by the LMF device to the network device, which sends the information to the terminal device through broadcasting the positioning system message. Alternatively, the first positioning assistance information may be the information provided by the LMF device to the network device, which sends the information to the terminal device through broadcasting, and the second positioning assistance information is the information sent by the LMF device to the terminal device through the LPP message.

In an exemplary embodiment, the terminal device receives the pre-configured first positioning assistance information, which is the information sent by the LMF device to the terminal device through the LPP message, hereinafter referred to as an LPP message. The terminal device receives the second positioning assistance information required for applying the current positioning technology sent by the network device when positioning the terminal device. The second positioning assistance information is the information provided by the LMF device to the network device, and then sent to the terminal device through broadcasting the positioning system message, hereinafter referred to as a system message. At this time, the terminal device receives both the LPP message and the system message. In this case, the LPP message and the system message may be compared to determine whether the terminal device uses the LPP message or the system message.

It is determined whether the LPP message is consistent with the system message, to determine whether the LPP message is available, and to determine whether the terminal device uses the LPP message or the system message. When the LPP message is consistent with the system message, the terminal device uses the LPP message or the system message. When the LPP message is inconsistent with the system message, the terminal device uses the system message. A request message for positioning assistance information is sent to the LMF device when the LPP message is inconsistent with the system message.

In an exemplary embodiment, the terminal device receives the pre-configured first positioning assistance information. The pre-configured first positioning assistance information is the information provided by the LMF device to the network device, and then sent to the terminal device through broadcasting the positioning system message, hereinafter referred to as a system message. The terminal device receives the second positioning assistance information required for applying the current positioning technology sent by the network device when positioning the terminal device. The second positioning assistance information is the information sent by the LMF device to the terminal device through the LPP message, hereinafter referred to as an LPP message. At this time, the terminal device receives both the system message and the LPP message. In this case, the system message and the LPP message may be compared to determine whether the terminal device uses the system message or the LPP messages.

It is determined whether the system message is consistent with the LPP message, to determine whether the system message is available, and to determine whether the terminal device use the system message or the LPP message. When the system message is consistent with LPP message, the terminal device uses the system message or the LPP message. When the system message is inconsistent with the LPP message, the terminal device uses the LPP message. The request message for positioning assistance information is sent to the LMF device when the system message is inconsistent with LPP message.

In the above embodiments provided by the disclosure, the methods provided by embodiments of the disclosure are introduced from the perspectives of the terminal device. In order to realize the various functions in the methods provided in the above embodiments of the disclosure, the terminal device may include a hardware structure, or a software module, and realize the above various functions in the form of the hardware structure, the software module, or a combination of the hardware structure and the software module. A certain function of the above functions may be performed in the form of the hardware structure, the software module, or a combination of the hardware structure and the software module.

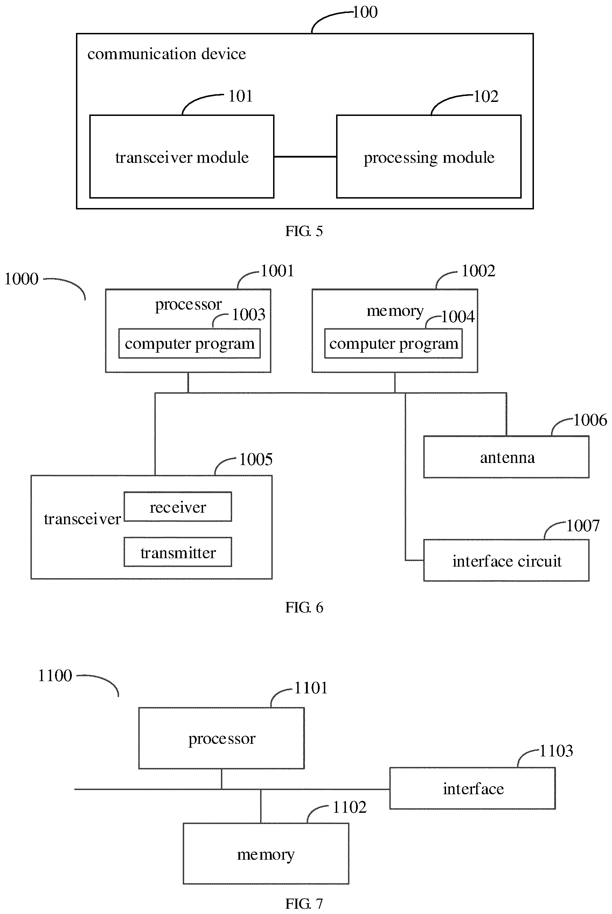

FIG. 5 is a structural diagram of a communication device 100 provided in an embodiment of the disclosure.

The communication device 100 shown in FIG. 5 may include a transceiver module 101 and a processing module 102. The transceiver module 101 may include a sending module and/or a receiving module. The sending module is configured to implement a sending function, the receiving module is configured to implement a receiving function, and the transceiver module 101 may implement the sending function and/or receiving function.

The communication device 100 may be a terminal device (such as the terminal device in the aforementioned method embodiments), a device within the terminal device, or a device that can be matched and used with the terminal device.

The communication device 100 is a terminal device (such as the terminal device in the aforementioned method embodiments).

The transceiver module 101 is configured to receive pre-configured first positioning assistance information.

The processing module 102 is configured to determine whether the first positioning assistance information is available, and use the first positioning assistance information when the first positioning assistance information is available.

Regarding the communication device in the above embodiment, the specific ways in which each module performs operations have been described in detail in the embodiments related to the method, and will not be elaborated here. The communication device provided in the above embodiments has the same or similar beneficial effects as the paging method provided in some of the above embodiments, and will not be elaborated here.

As illustrated in FIG. 6, FIG. 6 is a structural diagram illustrating a communication device according to an embodiment of the disclosure. The communication device 1000 may be a terminal device (such as the terminal device in the aforementioned method embodiments), or a chip, a chip system, or a processor that supports the terminal device to implement the above method. The device may be used to implement the method described in the above method embodiments, as described in the above method embodiments.

The communication device 1000 may include one or more processors 1001. The processor 1001 may be a general-purpose processor or a dedicated processor, etc. For example, it can be a baseband processor or a central processing unit. The baseband processor may be used to process communication protocols and data, and the central processor may be used to control the communication device (such as a base station, a baseband chip, a terminal device, a terminal device chip, a DU or a CU, etc.), execute computer programs, and process data of the computer program.

Optionally, the communication device 1000 may also include one or more memories 1002, on which a computer program 1004 may be stored. The memory 1002 executes the computer program 1004 to enable the communication device 1000 to perform the method described in the above embodiments. Optionally, the memory 1002 may also store data. The communication device 1000 and memory 1002 can be set separately or integrated together.

Optionally, the communication device 1000 may also include a transceiver 1005 and an antenna 1006. The transceiver 1005 may be referred to as a transceiver unit, a transceiver, or a transceiver circuit, etc., used to achieve transceiver functions. The transceiver 1005 may include a receiver and a transmitter. The receiver may be referred to as a receiver or a receiving circuit, etc., for achieving a receiving function. The transmitter may be referred to as a transmitter or a transmission circuit, etc., used to achieve transmission functions.

Optionally, the communication device 1000 may also include one or more interface circuits 1007. The interface circuit 1007 is used to receive code instructions and transmit them to the processor 1001. The processor 1001 executes the code instructions to cause the communication device 1000 to perform the method described in the above method embodiments.

The communication device 1000 is a terminal device (such as the terminal device in the aforementioned method embodiments), the processor 1001 is used to execute S2 and S3 in FIG. 2; S12 to S14 in FIG.; and S113 to S 115 in FIG. 4. The transceiver 1005 is used to execute S1 in FIG. 2; S11 in FIG. 3; and S111 and S 112 in FIG. 4.

In an implementation, the processor 1001 may include a transceiver for implementing reception and transmission functions. For example, the transceiver may be a transceiver circuit, an interface, or an interface circuit. The transceiver circuits, the interfaces, or the interface circuits used to achieve the receiving and sending functions can be separate or integrated together. The above-mentioned transceiver circuits, interfaces or interface circuits can be used for reading and writing code/data, or the above-mentioned transceiver circuits, interfaces or interface circuits can be used for signal transmission or transfer.

In one implementation, the processor 1001 may store a computer program 1003, which runs on the processor 1001 and enables the communication device 1000 to perform the method described in the above embodiments. The computer program 1003 may be embedded in the processor 1001, in which case the processor 1001 may be implemented by hardware.

In an implementation, the communication device 1000 may include circuits. The circuits may perform the functions of sending, receiving or communicating in the above method embodiments. The processors and transceivers described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, and the like. The processors and transceivers can also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a terminal device (such as the terminal device in the aforementioned method embodiments), but the scope of the communication device described in the disclosure is not limited thereto, and the structure of the communication device may not be limited by FIG. 6. The communication device may be a stand-alone device or may be part of a larger device. For example the communication device may be:
(1) a stand-alone IC, chip, chip system or subsystem;
(2) a set of one or more ICs, optionally, including storage components for storing data and computer programs;
(3) an ASIC, such as a modem;
(4) modules that can be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others, etc.

The case where the communication device may be a chip or a chip system is described with reference to FIG. 7, which is a structural diagram illustrating a chip according to an embodiment of the disclosure.

As illustrated in FIG. 7, the chip 1100 includes a processor 1101 and an interface 1103. There may be one or more processors 1001, and there may be multiple interfaces 1103.

In cases where the chip is used to implement the functions of the terminal device in embodiments of the disclosure,
the interface 1103 is configured to receive code instructions and transmitting the code instructions to the processor; and
the processor 1101 is configured to execute the code instructions to perform the positioning method in the above embodiments.

Optionally, the chip further includes a memory 1102. The memory 1102 is configured to store necessary computer programs and data.

It is understandable by those skilled in the art that various illustrative logical blocks and steps listed in the embodiments of the disclosure may be implemented through electronic hardware, computer software, or a combination thereof. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer is able to access to or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Unless the context otherwise requires, throughout the entire specification and claims, the term "comprise" and other forms such as the third person singular form " comprises" and the present participle form " comprising" are interpreted as open and inclusive, i.e. "including, but not limited to". In the description of the specification, the terms "one embodiment", "some embodiments", "exemplary embodiments", "an example", "a specific example", or "some examples" are intended to indicate that specific features, structures, material or characteristic related to the embodiment or example are included in at least one embodiment or example of the disclosure. The schematic representation of the above terms may not necessarily refer to the same embodiment or example. Furthermore, the specific features, structures, materials, or features described may be included in any one or more embodiments or examples in any appropriate manner.

Those skilled in the art may understand that the first, second, and other various numerical numbers involved in the disclosure are only described for the convenience of differentiation, and are not used to limit the scope of the embodiments of the disclosure or indicate the order of precedence.

The term "at least one" in the disclosure may also be described as one or more, and the term "multiple" may be two, three, four, or more, which is not limited in the disclosure. In the embodiments of the disclosure, for one type of technical features, "first", "second", and "third", and "A", "B", "C" and "D" are used to distinguish different technical features of this type, the technical features described using the "first", "second", and "third", and "A", "B", "C" and "D" do not indicate any order of precedence or magnitude.

The term "pre-configure" in the disclosure may be understood as define, pre-define, store, pre-store, pre-negotiate, pre-define and configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in hardware or software depends on a particular application and design constraints of the technical solution. Those skilled in the art may use different methods to implement the described functions for each particular application, but such implementations should not be considered as beyond the scope of the disclosure.

It is clearly understood by those skilled in the art that, for the convenience and conciseness of description, the specific working processes of the system, the devices, and the units described above can be referred to the corresponding processes in the above method embodiments, and will not be repeated herein.

The above are only specific implementations of the disclosure, but the scope of protection of the disclosure is not limited thereto. Those skilled in the art familiar to this technical field can easily think of changes or substitutions within the technical scope disclosed by the disclosure, which shall be covered within the scope of protection of the disclosure. Therefore, the scope of protection of the disclosure shall be based on the scope of protection of the appended claims.

## Claims

1. A positioning method, performed by a terminal device, comprising:
receiving pre-configured first positioning assistance information; and
determining whether the first positioning assistance information is available, and using the first positioning assistance information in response to determining that the first positioning assistance information is available.

2. The method according to claim 1, further comprising:
sending a request message for positioning assistance information to a location management function (LMF) device in response to determining that the first positioning assistance information is unavailable.

3. The method according to claim 1, further comprising:
sending an error indication message to an LMF device to indicate that the first positioning assistance information is unavailable in response to determining that the first positioning assistance information is unavailable.

4. The method according to claim 1, further comprising:
sending a location providing information message to an LMF device in response to determining that the first positioning assistance information is unavailable, wherein the location providing information message contains error indication information for indicating that the first positioning assistance information is unavailable.

5. The method according to any one of claims 2 to 4, wherein determining that the first positioning assistance information is unavailable comprises:
receiving a message triggering the terminal device to use the first positioning assistance information, and determining that the terminal device is unable to measure a positioning reference signal (PRS) based on the first positioning assistance information.

6. The method according to any one of claims 2 to 4, wherein determining that the first positioning assistance information is unavailable comprises:
determining that the first positioning assistance information has a timeliness characteristic, and determining that the first positioning assistance information is invalid.

7. The method according to claim 6, further comprising:
sending the request message for the positioning assistance information to the LMF device in response to determining that the first positioning assistance information is invalid.

8. The method according to claim 1, wherein determining whether the first positioning assistance information is available and using the first positioning assistance information in response to determining that the first positioning assistance information is available comprises:
receiving a message triggering the terminal device to use the first positioning assistance information, and determining whether a network device sends second positioning assistance information required for applying a current positioning technology;
determining whether the first positioning assistance information is consistent with the second positioning assistance information in response to determining that the network device sends the second positioning assistance information; and
using the first positioning assistance information or the second positioning assistance information in response to determining that the first positioning assistance information is consistent with the second positioning assistance information.

9. The method according to claim 8, further comprising:
using the second positioning assistance information in response to determining that the first positioning assistance information is inconsistent with the second positioning assistance information.

10. The method according to claim 8, further comprising:
sending a request message for positioning assistance information to an LMF device in response to determining that the first positioning assistance information is inconsistent with the second positioning assistance information.

11. The method according to any one of claims 1 to 10, wherein receiving the pre-configured first positioning assistance information comprises:
receiving the first positioning assistance information sent by an LMF device through a long term evolution positioning protocol (LPP) message; or
receiving the first positioning assistance information sent by a network device, the first positioning assistance information being provided by the LMF device.

12. A communication device, comprising:
a transceiver module, configured to receive pre-configured first positioning assistance information; and
a processing module, configured to determine whether the first positioning assistance information is available, and use the first positioning assistance information in response to determining that the first positioning assistance information is available.

13. A communication device, comprising:
a processor; and
a memory having at least one program code stored therein;
wherein the processor loads and executes the program code to perform the method according to any of claims 1 to 11.

14. A communication device, comprising: a processor and an interface circuit; wherein,
the interface circuit is configured to receive a code instruction and transmit the code instruction to the processor; and
the processor is configured to execute the code instruction to perform the method according to any of claims 1 to 11.

15. A computer-readable storage medium having stored therein instructions, wherein the method according to any of claims 1 to 11 is implemented when the instructions are executed.
